(19) Europäisches Patentamt
European Patent Office
Office européen des brevets

(11) **EP 3 755 476 B1**

(12) **FASCICULE DE BREVET EUROPEEN**

(45) Date de publication et mention de la délivrance du brevet:
**16.03.2022 Bulletin 2022/11**

(21) Numéro de dépôt: **19710758.4**

(22) Date de dépôt: **19.02.2019**

(51) Classification Internationale des Brevets (IPC):
**B21B 38/02** [(2006.01)]

(52) Classification Coopérative des Brevets (CPC):
**B21B 38/02; G01B 11/18; G01B 11/306**

(86) Numéro de dépôt international:
**PCT/FR2019/050368**

(87) Numéro de publication internationale:
**WO 2019/162606 (29.08.2019 Gazette 2019/35)**

(54) **ROULEAU DE PLANÉITÉ, SYSTÈME DE MESURE DE PLANÉITÉ ET LIGNE D'OPÉRATIONS DE LAMINAGE ASSOCIÉS**

PLANHEITSWALZE, SYSTEM ZUR MESSUNG DER PLANHEIT UND ZUGEHÖRIGE LINIE FÜR WALZVORGÄNGE

FLATNESS ROLLER, SYSTEM FOR MEASURING FLATNESS AND ASSOCIATED ROLLING OPERATIONS LINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.02.2018 FR 1851553**

(43) Date de publication de la demande:
**30.12.2020 Bulletin 2020/53**

(73) Titulaires:
• **Commissariat à l'énergie atomique et aux énergies alternatives**
**75015 Paris (FR)**
• **ArcelorMittal**
**1160 Luxembourg (LU)**

(72) Inventeurs:
• **MAGNE, Sylvain**
**92320 CHATILLON (FR)**
• **LEGRAND, Nicolas**
**CHICAGO, ILLINOIS 60640 (US)**

(74) Mandataire: **Brevalex**
**95, rue d'Amsterdam**
**75378 Paris Cedex 8 (FR)**

(56) Documents cités:
**EP-A1- 0 028 191       EP-A1- 0 595 072**
**EP-A1- 0 940 662       EP-A1- 3 009 206**
**DE-B3-102008 030 282**

**Description**

**DOMAINE TECHNIQUE**

La présente invention concerne un rouleau de planéité comportant un corps de forme cylindrique s'étendant le long d'un axe de révolution et délimité radialement par une surface externe. EP 3 009 206 A1 divulgue un rouleau selon le préambule de la rev. 1.

L'invention concerne également un système de mesure de planéité comprenant un tel rouleau de planéité, et une ligne d'opérations de laminage comportant un tel système de mesure de planéité.

L'invention s'applique au domaine du laminage, notamment au laminage de tôles métalliques telles que des tôles métalliques fines, en particulier au laminage à froid de tôles métalliques fines. L'invention s'applique également au laminage de bandes de papier ou de plastique.

**ÉTAT DE LA TECHNIQUE ANTÉRIEURE**

Il est connu de recourir au laminage pour réaliser des tôles métalliques de faible épaisseur (typiquement de l'ordre de 0,1 mm à 1 mm), dites « tôles fines ».

Par exemple, dans le domaine de l'emballage, le recours à de telles tôles fines est destiné à réduire le volume de déchets à recycler. Dans le domaine des transports, l'utilisation de tôles fines est motivée par une volonté de réduction des coûts de fabrication, mais également de réduction du poids des véhicules, qui se traduit par une réduction de la consommation et de la pollution desdits véhicules.

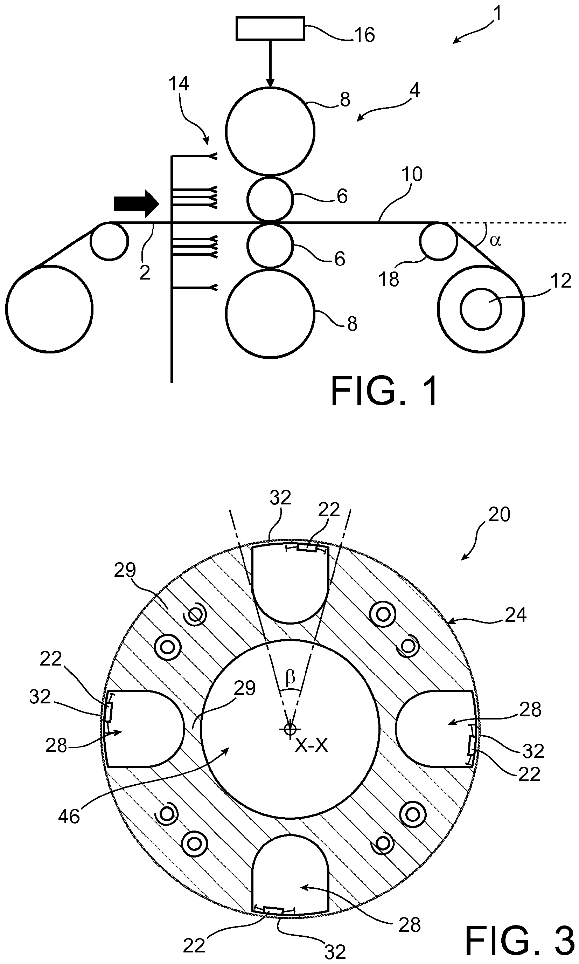

Une ligne d'opérations de laminage 1 classique est schématiquement illustrée par la figure 1.

Sur une telle ligne d'opérations de laminage 1, un matériau 2 est acheminé, suivant le sens de la flèche, en direction d'une cage de laminoir 4. Le matériau est, par exemple, un métal, de la pâte de papier ou du plastique. Dans la cage de laminoir 4, le matériau 2 est comprimé entre deux cylindres de travail 6 en rotation et séparés d'une distance appelée « emprise de laminage ». Les cylindres de travail 6 sont eux-mêmes pris entre deux cylindres de soutien 8. La tôle 10 en sortie de la cage de laminoir 4, également appelée « bande », est ensuite enroulée sous l'effet d'une bobineuse 12.

Il est connu que le laminage, en particulier le laminage de tôles fines, favorise généralement l'apparition de défauts de planéité de la tôle 10 en sortie de la cage de laminoir 4. De tels défauts naissent principalement d'une relaxation de contraintes internes dues à une inhomogénéité des efforts appliqués par les cylindres de travail 6, résultant d'une irrégularité de l'emprise dans une direction axiale des cylindres de travail 6, causée par des déformations élastiques d'aplatissement et de flexion des cylindres de travail 6. De tels défauts résultent généralement de déformations élastiques d'aplatissement et de flexion des cylindres de la cage de laminoir.

De telles déformations des cylindres de la cage de laminoir sont d'autant plus critiques que le produit est mince et dur. La planéité d'une tôle laminée constitue un critère de qualité fondamental de la géométrie d'une tôle laminée.

Il est connu de mettre en œuvre un procédé de contrôle en ligne des opérations de laminage, au cours duquel des données issues d'un système de mesure de planéité en sortie de cage de laminoir 4 sont mises en œuvre, dans une boucle de régulation, pour commander des buses 14 destinées à arroser localement les cylindres 6, 8 de la cage de laminoir 4 pour en modifier localement l'état de déformation, ou encore pour commander des actionneurs 16 destinés à agir sur les cylindres 6, 8 de la cage de laminoir 4 pour en modifier la flexion, et donc modifier la distribution d'effort dans le matériau 2 en cours de laminage.

Le système de mesure de planéité comporte, par exemple, un rouleau de planéité 18.

Un tel rouleau de planéité 18 est un rouleau s'étendant parallèlement aux cylindres de travail 6, agencé en sortie de la cage de laminoir 4, et contre lequel la tôle 10 est délibérément mise en contact et en flexion selon un angle a, dit « angle d'embarrage », afin de générer sur le rouleau de planéité 18, par le biais d'un effort de traction sur la tôle, un effort moyen de valeur contrôlée.

Des capteurs équipant le rouleau de planéité 18 mesurent alors un profil d'effort appliqué par la bande 10 sur la surface du rouleau de planéité 18, et plus spécifiquement le long d'une « génératrice », qui est une portion de la surface du rouleau de planéité 18 allongée le long d'un axe parallèle à l'axe du rouleau de planéité 18.

La distribution des efforts différentiels sur la génératrice, par rapport à un effort moyen, est représentative de la planéité de la tôle 10. Une telle distribution, appelée « vecteur de planéité », constitue la donnée mise en œuvre dans la boucle de régulation précédemment décrite.

Néanmoins, les rouleaux de planéité de l'état de la technique ne donnent pas entière satisfaction.

En effet, dans le cas des tôles minces, les rouleaux de planéité de l'état de la technique présentent généralement une résolution spatiale le long de chaque génératrice, une sensibilité, c'est-à-dire une résolution en effort, une dynamique et une bande passante insuffisantes pour fournir un vecteur de planéité suffisamment précis pour garantir une commande efficace par régulation de la ligne d'opérations de laminage 1.

En outre, la fabrication et l'entretien de tels rouleaux de planéité sont généralement onéreux.

Un but de l'invention est donc de proposer un rouleau de planéité qui ne présente pas certains au moins de ces inconvénients.

**EXPOSÉ DE L'INVENTION**

A cet effet, l'invention a pour objet un rouleau de planéité du type précité, dans lequel le corps comporte au moins une cavité s'étendant parallèlement à l'axe de révolution,

chaque cavité débouchant radialement sur la surface externe au travers d'une pluralité de fentes s'étendant chacune dans un plan respectif orthogonal à l'axe de révolution, parmi lesquelles deux fentes successives le long d'un axe parallèle à l'axe de révolution définissant entre elles une lamelle, chaque lamelle étant reliée au corps par deux extrémités circonférentielles opposées de la lamelle, chaque extrémité circonférentielle formant un encastrement, les lamelles alignées suivant une direction parallèle à l'axe de révolution formant une génératrice, le rouleau de planéité comportant, en outre, au moins une fibre optique comprenant au moins un capteur de déformation, chaque capteur de déformation présentant un axe de mesure, chaque capteur de déformation étant associé à une lamelle, chaque capteur de déformation étant logé dans une cavité correspondante et fixé à la lamelle correspondante au niveau d'un encastrement de la lamelle, chaque capteur de déformation étant agencé de sorte que l'angle entre l'axe de mesure correspondant et un plan orthogonal à l'axe de révolution X-X soit inférieur ou égal à 20°, de préférence inférieur ou égal à 10°, chaque fibre optique étant configurée pour recevoir un signal d'interrogation, chaque capteur de déformation de chaque fibre optique étant configuré pour émettre, en fonction du signal d'interrogation reçu par la fibre optique correspondante, une onde optique de réponse représentative d'une déformation du capteur de déformation le long de l'axe de mesure correspondant.

En effet, les lamelles étant séparées par des fentes, les effets des couplages latéraux entre lamelles sont grandement réduits par rapport au cas où de telles lamelles ne seraient pas séparées dans la direction longitudinale.

En outre, pour une lamelle donnée, les encastrements constituant les zones de la lamelle qui présentent les plus grandes valeurs de déformation orthoradiale pour un effort radial donné appliqué sur la lamelle, l'agencement de chaque capteur de déformation au niveau d'un encastrement de la lamelle est l'agencement qui confère la plus grande sensibilité pour la mesure de déformation orthoradiale.

En outre, le recours à une pluralité de capteurs agencés sur une même fibre optique autorise un relevé simultané de déformation pour chaque lamelle le long d'une génératrice du rouleau de planéité.

En outre, le fait que chaque capteur de déformation soit agencé de sorte que l'angle entre l'axe de mesure correspondant et un plan orthogonal à l'axe de révolution X-X soit inférieur ou égal à 20°, de préférence inférieur ou égal à 10, se traduit par une plus grande déformation du capteur de déformation que dans les cas où le capteur de déformation serait agencé à un angle supérieur, ce qui améliore la sensibilité.

De telles caractéristiques confèrent une sensibilité suffisante pour atteindre les performances requises en matière de détection de gradient de déformation dans la bande, typiquement 50 microdéformations pour de très fines épaisseurs de bande (de l'ordre de 0,1 mm).

Suivant d'autres aspects avantageux de l'invention, le rouleau de planéité comporte une ou plusieurs des caractéristiques suivantes, prise(s) isolément ou suivant toutes les combinaisons techniquement possibles :

- au moins une lamelle présente une épaisseur constante ;
- au moins une cavité présente, dans un plan orthogonal à l'axe de révolution, une section circulaire ;
- chaque lamelle est configurée pour présenter une déformation circonférentielle comprise entre 1 et 50 microdéformations par newton d'effort radial appliqué à la lamelle ;
- chaque génératrice présente une densité de fentes variable, la densité de fentes dans au moins une zone périphérique de la génératrice étant, de préférence, supérieure à la densité de fentes dans une zone intermédiaire de la génératrice ;
- le corps est formé d'une pluralité de tronçons agencés bout-à-bout axialement, chaque tronçon étant associé à au moins une fibre optique propre dont l'ensemble des capteurs de déformation sont fixés aux lamelles dudit tronçon ;
- le corps comporte au moins une partie pleine agencée radialement vers l'intérieur par rapport à au moins une cavité et/ou circonférentiellement entre deux cavité ;
- chaque cavité est remplie d'un élastomère agencé pour assurer une étanchéité de la cavité ;
- le rouleau de planéité comporte au moins une portion transparente, la portion transparente étant propre à transmettre au moins partiellement une onde électromagnétique appartenant à une gamme de fréquences prédéterminée ;
- chaque capteur de déformation est un réseau de Bragg photo-inscrit sur fibre.

En outre, l'invention a pour objet un système de mesure de planéité comportant un rouleau de planéité tel que défini ci-dessus et une unité de détection, l'unité de détection étant configurée pour émettre le signal d'interrogation à destination de chaque fibre optique et pour recevoir, en provenance de chaque fibre optique, un signal de mesure formé par les ondes optiques de réponse générées par les capteurs de déformation de la fibre optique, l'unité de détection étant également configurée pour mesurer un angle de rotation du corps par rapport à une position de référence, chaque génératrice étant associée à un angle de contact, l'unité de détection étant configurée pour acquérir le signal de mesure en provenance de chaque fibre optique lorsque l'angle de rotation du corps est égal à l'angle de contact, l'unité de détection étant, en outre, configurée pour calculer un vecteur de planéité en fonction de chaque signal de mesure acquis.

Suivant d'autres aspects avantageux de l'invention, le système de mesure de planéité comporte une ou plusieurs des caractéristiques suivantes, prise(s) isolément ou suivant toutes les combinaisons techniquement possibles :

- chaque génératrice est également associée à un angle en entrée de contact et un angle en sortie de contact, l'angle de contact étant compris entre l'angle en entrée de contact et l'angle en sortie de contact, l'unité de détection étant configurée pour acquérir le signal de mesure en provenance de chaque fibre optique lorsque l'angle de rotation du corps est égal à chacun parmi l'angle en entrée de contact et l'angle en sortie de contact, l'unité de détection étant, en outre, configurée pour mettre en œuvre le signal de mesure acquis pour chacun parmi l'angle en entrée de contact, l'angle de contact et l'angle en sortie de contact pour calculer un vecteur de planéité corrigé d'effets de la température sur les lamelles de la génératrice lors de la rotation du corps entre l'angle en entrée de contact et l'angle en sortie de contact correspondants ;
- le corps du rouleau de planéité est métallique et comporte un évidement central, l'unité de traitement étant au moins en partie logée dans l'évidement central.

En outre, l'invention a pour objet une ligne d'opérations de laminage comportant un système de mesure de planéité tel que défini ci-dessus.

**BRÈVE DESCRIPTION DES DESSINS**

L'invention sera mieux comprise à l'aide de la description qui va suivre, donnée uniquement à titre d'exemple non limitatif et faite en se référant aux dessins annexés sur lesquels :

- la figure 1, déjà décrite, est une vue schématique de côté d'une ligne d'opérations de laminage ;
- la figure 2 est une représentation schématique d'un premier mode de réalisation d'un système de mesure de planéité selon l'invention, un rouleau de planéité du système de mesure de planéité étant représenté en section selon un plan contenant un axe de révolution du rouleau de planéité ;
- la figure 3 est une vue en section du rouleau de planéité de la figure 2, dans un plan orthogonal à l'axe de révolution ;
- la figure 4 est une vue de dessus d'un corps du rouleau de planéité de la figure 2, montrant une génératrice du rouleau de planéité ;
- la figure 5 est un détail de la vue en section de la figure 3 ;
- les figures 6A, 6B et 6C correspondent à la vue en section de la figure 3 lorsqu'une génératrice du rouleau de planéité se trouve respectivement à une position angulaire égale à un angle en entrée de contact prédéterminé, un angle de contact prédéterminé et un angle en sortie de contact prédéterminé ;
- la figure 7 est une représentation schématique d'un deuxième mode de réalisation d'un système de mesure de planéité selon l'invention, un rouleau de planéité du système de mesure de planéité étant représenté en section selon un plan contenant un axe de révolution du rouleau de planéité ;
- la figure 8 est une représentation schématique d'un troisième mode de réalisation d'un système de mesure de planéité selon l'invention, un rouleau de planéité du système de mesure de planéité étant représenté en section selon un plan contenant un axe de révolution du rouleau de planéité ; et
- la figure 9 est une vue en section d'une variante du rouleau de planéité de la figure 2, dans un plan orthogonal à l'axe de révolution.

**EXPOSÉ DÉTAILLÉ DE MODES DE RÉALISATION PARTICULIERS**

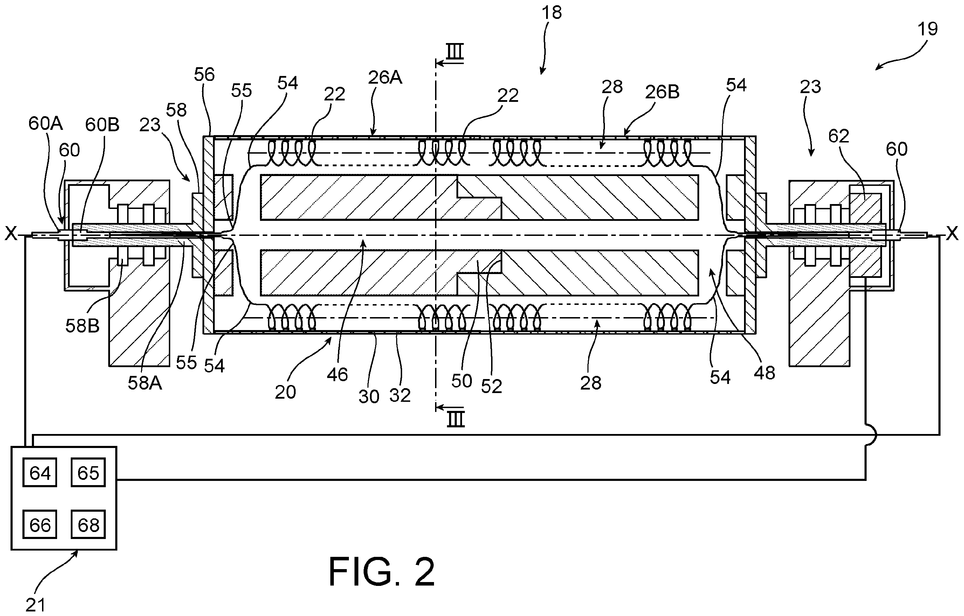

Un système de mesure de planéité 19 selon l'invention est illustré par la figure 2.

Le système de mesure de planéité 19 comporte un rouleau de planéité 18 et une unité de détection 21.

Le rouleau de planéité 18 est destiné à recevoir la tôle 10 métallique (ou la bande de papier ou de plastique) dont la planéité doit être mesurée, et à délivrer au moins un signal de mesure représentatif de la planéité de la tôle 10.

L'unité de détection 21 est configurée pour recevoir chaque signal de mesure et pour déterminer, à partir du signal de mesure, au moins une grandeur relative à la planéité de la tôle 10.

Le rouleau de planéité 18 comprend un corps 20, des capteurs 22 et deux dispositifs d'extrémité 23.

Le corps 20 est destiné à entrer en contact avec la tôle 10 pour subir un effort exercé par la tôle 10 sur le corps 20, lorsque le rouleau de planéité 18 opère au sein de la ligne d'opérations de laminage 1.

Les capteurs 22 sont configurés pour mesurer une grandeur représentative de l'effort exercé par la tôle 10 sur le corps 20. Comme cela sera décrit ultérieurement, les capteurs 22 sont des capteurs de déformation (également appelés *« strain sensors »* en anglais).

Les dispositifs d'extrémité 23 sont, entre autres, destinés à supporter le corps 20.

Le corps 20 va maintenant être décrit en référence aux figures 2 à 5.

Le corps 20 présente la forme d'un cylindre de révolution s'étendant le long d'un axe de révolution X-X. Comme cela sera décrit ultérieurement, l'axe de révolution X-X est également un axe de rotation du rouleau de planéité 18.

Le corps 20 est délimité radialement par une surface externe 24.

Le corps 20 est réalisé d'un seul tenant, ou encore formé d'une pluralité de tronçons solidaires entre eux et agencés bout-à-bout axialement.

Sur l'exemple de la figure 2, le cylindre 20 est formé par un premier tronçon 26A cylindrique solidaire d'un deuxième tronçon 26B cylindrique, chacun présentant l'axe de révolution X-X comme axe de révolution propre.

Le corps 20 comprend au moins une cavité 28 et, pour chaque cavité 28, une pluralité de fentes 30 correspondantes et une pluralité de lamelles 32 correspondantes. En outre, le corps 20 comporte des parties pleines 29 agencées radialement vers l'intérieur par rapport aux cavités 28 et/ou circonférentiellement entre les cavités 28.

Chaque cavité 28 est ménagée dans le corps 20 et débouche sur la surface externe 24 par la pluralité de fentes 30 correspondantes. En outre, chaque lamelle 32 est définie entre, c'est-à-dire délimitée par, deux fentes 30 qui sont successives le long d'une direction parallèle à l'axe de révolution X-X.

Chaque cavité 28 s'étend selon un axe respectif parallèle à l'axe de révolution X-X.

Par exemple, le corps 20 comporte quatre cavités 28 décalées les unes des autres dans la direction circonférentielle du corps 20 et s'étendant chacune selon un axe respectif parallèle à l'axe de révolution X-X.

Avantageusement, les cavités 28 sont agencées de sorte que le centre de gravité du corps 20 se trouve sur l'axe de révolution X-X, de sorte que le rouleau de planéité 18 ne présente pas de balourd lors de sa rotation autour de l'axe de révolution X-X. Par exemple, le corps 20 est invariant par une rotation d'angle prédéterminé autour de l'axe de révolution X-X. Dans ce cas, les cavités 28 sont également invariantes par ladite rotation d'angle prédéterminé autour de l'axe de révolution X-X.

Sur l'exemple de la figure 3, le corps 20 est invariant par une rotation de 90° (degrés) autour de l'axe de révolution X-X.

De préférence, chaque cavité 28 est telle que, dans au moins un plan transversal III-III qui est un plan orthogonal à l'axe de révolution X-X, la cavité 28 présente une étendue angulaire β, par référence à l'axe de révolution X-X, qui est inférieure à 180°, de préférence inférieure à 120°, par exemple inférieure à 90°.

Par « étendue angulaire de la cavité 28 », il est entendu, au sens de la présente invention, l'angle du plus petit secteur angulaire formé à partir de l'axe de révolution X-X et englobant l'intégralité de la cavité 28. Il s'agit, autrement dit, du secteur angulaire dont les deux segments sont tangents à la cavité 28.

Par exemple, chaque cavité 28 présente une étendue angulaire β valant environ 40°.

Chaque cavité 28 débouche radialement sur la surface externe 24 au travers de la pluralité de fentes 30 correspondantes.

Chaque fente 30 s'étend dans un plan respectif orthogonal à l'axe de révolution X-X. Chaque fente 30 présente deux extrémités circonférentielles de fente 31.

De préférence, deux fentes 30 successives le long d'un axe parallèle à l'axe de révolution X-X sont séparées par une distance inférieure ou égale à 50 mm, avantageusement inférieure ou égale à 25 mm, par exemple inférieure ou égale à 5 mm.

De préférence, les fentes 30 sont identiques.

Chaque lamelle 32 est axialement définie entre deux fentes 30 successives le long d'un axe parallèle à l'axe de révolution X-X. En outre, chaque lamelle 32 est radialement définie entre la surface externe 24 et la cavité 28 correspondante.

Chaque lamelle 32 comprend une face externe 34, une face interne 36 et deux extrémités circonférentielles 38 opposées.

La face externe 34 est définie comme une partie de la surface externe 24 du corps 20. La face externe 34 est convexe.

La face interne 36 est orientée à l'opposé de la face externe 34. La face interne 36 contribue ainsi à délimiter la cavité 28 correspondant à la lamelle 32.

De préférence, la face interne 36 est concave.

En outre, chaque lamelle 32 est raccordée au corps 20 par ses deux extrémités circonférentielles 38, qui sont définies dans l'alignement axial, c'est-à-dire l'alignement le long d'un axe parallèle à l'axe de révolution X-X, des extrémités circonférentielles de fente 31 des deux fentes délimitant ladite lamelle 32.

Les extrémités circonférentielles 38 sont également appelées « encastrements ».

Par exemple, chaque lamelle 32 est venue de matière avec le corps 20. En variante, chaque lamelle 32 est rapportée et est fixée au corps 20 au moyen de ses extrémités circonférentielles 38.

Avantageusement, chaque lamelle 32 présente une épaisseur constante.

Par « épaisseur » d'une lamelle 32, il est entendu, au sens de la présente invention, la distance radiale entre la face interne 36 et la face externe 34 de la lamelle 32 par rapport à l'axe de révolution X-X.

L'épaisseur des lamelles 32 est inférieure ou égale à une épaisseur prédéterminée. L'épaisseur prédéterminée est, notamment, choisie en fonction de propriété mécaniques de la tôle 10 dont les défauts de planéité sont à mesurer, ainsi que d'une sensibilité en effort recherchée.

L'épaisseur prédéterminée est, de préférence, inférieure ou égale à 10 mm, avantageusement inférieure à 5 mm, par exemple inférieure ou égale à 2 mm.

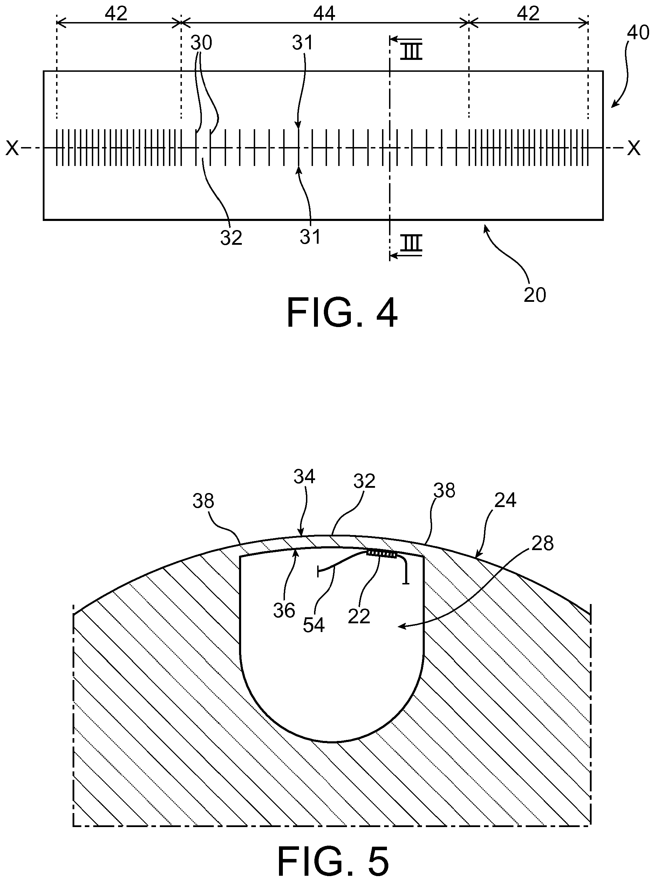

Par exemple, dans le cas d'une cavité 28 à section biconvexe, notamment une section en écusson comme sur la figure 5, la lamelle 32 présente une épaisseur constante.

Par « cavité à section biconvexe », il est entendu, au sens de la présente invention, une cavité 28 telle que l'intersection d'un plan transversal avec la cavité 28 définit un pourtour biconvexe, en l'occurrence convexe à la fois lorsque la cavité est vue depuis un côté radial extérieur, c'est-à-dire plus éloigné de l'axe X-X que la cavité, et lorsque la cavité est vue depuis un côté radial intérieur, c'est-à-dire moins éloigné de l'axe X-X que la cavité.

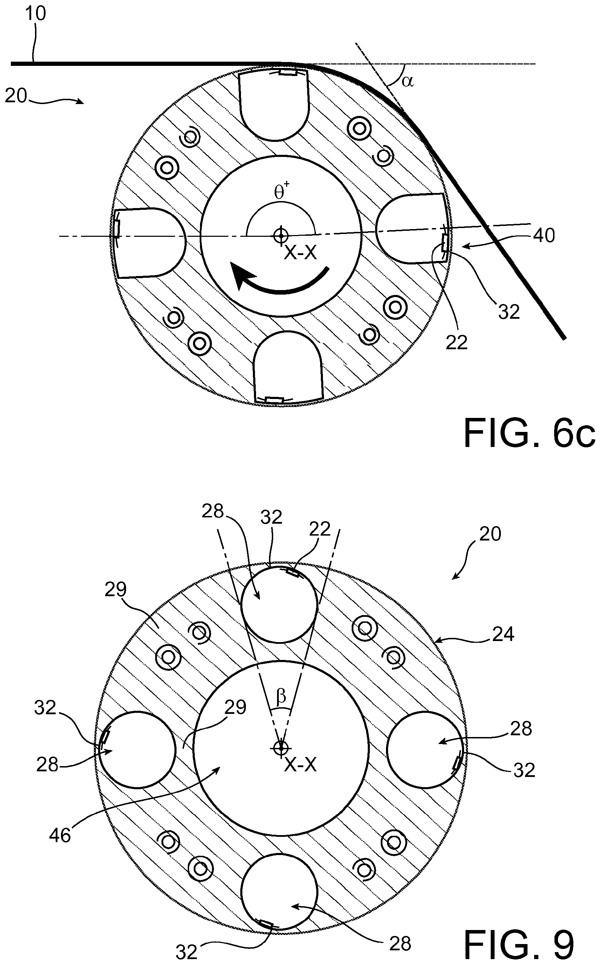

Selon un autre exemple, la cavité 28 est à section circulaire, comme illustré par la figure 9.

Dans ce cas, pour chaque lamelle 32, les encastrements 38 correspondent aux deux parties de la lamelle 32 qui sont localisées en deux positions angulaires situées de part et d'autre d'une partie médiane de la lamelle 32, par référence à l'axe de révolution X-X et pour lesquelles la lamelle 32 présente une déformation orthoradiale maximale pour un effort radial donné appliqué sur la lamelle 32. Dans ce cas, et comme cela sera décrit par la suite, chacun parmi les capteurs 22 de déformation est placé en une parmi les parties des lamelles 32 susceptibles de présenter une déformation circonférentielle au moins égale à un quart d'une déformation circonférentielle maximale subie par la lamelle 32 lors de l'application d'un effort radial donné sur la lamelle 32, par exemple au moins égale à la moitié d'une déformation circonférentielle maximale subie par la lamelle 32 lors de l'application d'un effort radial donné sur la lamelle 32.

De préférence, toutes les lamelles 32 du rouleau de planéité 18 présentent la même épaisseur.

L'ensemble des lamelles 32 disposées le long d'un même axe parallèle à l'axe de révolution X-X forme une génératrice 40 du rouleau de planéité 18 (figure 4).

Par exemple, la génératrice 40 comporte plusieurs zones qui se succèdent selon la direction de l'axe de révolution X-X et qui se distinguent les unes des autres par une densité de fentes 30, c'est-à-dire un nombre de fentes 30 par unité de longueur le long de la génératrice 40. La génératrice 40 comporte ainsi, par exemple, deux zones périphériques 42 séparées par une zone intermédiaire 44.

De préférence, dans les zones périphériques 42, la distance entre fentes 30 successives est supérieure à la distance entre fentes 30 successives de la zone intermédiaire 44. Ceci confère une plus grande résolution de mesure au niveau des zones périphériques de la tôle 10, c'est-à-dire au niveau des bords de la tôle 10, qui sont des zones où les gradients de contraintes internes dans la tôle 10 sont les plus élevés, et où des déformations de la tôle 10 sont susceptibles de présenter des étendues spatiales plus faibles que dans une partie intermédiaire de la tôle 10.

Par exemple, la distance entre fentes successives de la zone intermédiaire 44 est comprise entre 10 mm et 40 mm, de préférence entre 15 mm et 30 mm. En outre, la distance entre fentes successives au sein de chacune des zones périphériques 42 est, par exemple, comprise entre 1 mm et 15 mm, de préférence entre 3 mm et 10 mm.

Les fentes des zones périphériques 42 sont, de préférence, régulièrement espacées. En outre, les fentes de la zone intermédiaire 44 sont, de préférence, régulièrement espacées.

Avantageusement, le corps 20 comporte, en outre, un évidement central 46 (figures 2 et 3).

L'évidement central 46 s'étend, de préférence, le long de l'axe de révolution X-X. Dans ce cas, le corps 20 comporte, avantageusement, des ouvertures traversantes 48 mettant en communication l'évidement central 46 avec chacune des cavités 28.

Dans le cas où le corps 20 est formé de tronçons, les tronçons 26 comportent, à leurs extrémités en contact mutuel, des moyens de centrage réciproque, par exemple une partie mâle 50 et une partie femelle 52 destinées à coopérer l'une avec l'autre. En outre, le corps 20 comporte des moyens de blocage, par exemple une clavette, destinés à empêcher une rotation relative des tronçons autour de l'axe de révolution X-X.

Les capteurs 22 (figure 5) sont configurés pour mesurer une grandeur représentative d'un effort exercé sur le corps 20. En particulier, chaque capteur 22 est associé à une lamelle 32 et configuré pour mesurer une grandeur représentative d'un effort exercé sur la lamelle 32 correspondante.

Chaque capteur 22 est un capteur optique. Plus précisément, chaque capteur 22 est un segment d'une fibre optique 54 dans lequel est inscrit un réseau de Bragg, de sorte que le capteur 22 est un réseau de Bragg photo-inscrit sur fibre (également appelé « *fiber Bragg grating* » en anglais). Une même fibre optique 54 est susceptible de comporter une pluralité de capteurs 22, typiquement plusieurs dizaines de capteurs 22.

Chaque capteur 22 est configuré pour recevoir, en provenance d'une extrémité d'entrée-sortie 55 de la fibre optique 54 correspondante, une onde optique formant un signal d'interrogation.

En outre, chaque capteur 22 est configuré pour émettre, en direction de l'extrémité d'entrée-sortie 55 de la fibre optique 54 correspondante, une onde optique de réponse. L'ensemble des ondes optiques de réponse fournies par les capteurs 22 forme le signal de mesure de la fibre optique 54.

Chaque capteur 22 présente une longueur d'onde de réflexion $\lambda$ respective. Une telle longueur d'onde de réflexion $\lambda$, également appelée « longueur d'onde de résonance » ou « longueur d'onde de Bragg », est définie comme la longueur d'onde pour laquelle le coefficient de réflexion du réseau de Bragg est maximal. Il en résulte que, pour chaque fibre optique 54, le signal de mesure présente un spectre assimilable à un peigne, chaque pic du spectre étant associé à un capteur 22 de la fibre optique 54.

A une température de référence donnée, lorsqu'aucune déformation n'est subie par le capteur 22, la longueur d'onde de réflexion du capteur 22 est appelée « longueur d'onde de réflexion au repos » et notée $\lambda_0$.

Les longueurs d'onde de réflexion au repos $\lambda_0$ des capteurs 22 appartenant à une même fibre optique 54 sont deux à deux distinctes.

Chaque capteur 22 présente un axe de mesure, pris comme étant un axe tangent au milieu du segment de fibre optique formant ledit capteur 22.

Chaque capteur 22 est tel qu'une déformation le long de l'axe de mesure correspondant, c'est-à-dire un allongement relatif (d'origine mécanique et/ou thermique) ou un raccourcissement relatif (d'origine mécanique et/ou thermique), se traduit par une variation $\delta\lambda$ de la longueur d'onde de réflexion $\lambda$ du capteur 22 par rapport à la longueur d'onde de réflexion au repos $\lambda_0$. Dans ce cas, chaque capteur 22 est un capteur de déformation.

Avantageusement, pour chaque fibre optique 54, le plus petit écart entre les longueurs d'onde de réflexion au repos $\lambda_0$ des capteurs 22 est strictement supérieur au double de la variation maximale $\delta\lambda_{max}$ de longueur d'onde de réflexion susceptible d'être ressentie par chaque capteur 22.

En fonctionnement, dans le signal de mesure issu d'une fibre optique 54 donnée, chaque pic est associé à un capteur 22 et est localisé à une longueur d'onde égale à la somme de la longueur d'onde au repos $\lambda_0$ correspondante et de la variation $\delta\lambda$ résultant de la déformation du capteur 22 le long de l'axe de mesure correspondant.

Chaque fibre optique 54 est logée dans une cavité 28 correspondante, de sorte que chaque capteur 22 soit fixé, par exemple collé, à la lamelle correspondante 32.

Plus précisément, le capteur 22 est fixé à la face interne 36 de la lamelle 32 correspondante, au niveau de l'un des encastrements 38 de la lamelle 32.

Plus précisément, le capteur 22 est fixé à la face interne 36 de la lamelle 32 correspondante, en une partie de la lamelle 32 susceptible de présenter une déformation circonférentielle au moins égale à un quart d'une déformation circonférentielle maximale subie par la lamelle 32 lors de l'application d'un effort radial donné sur la lamelle 32, par exemple au moins égale à la moitié d'une déformation circonférentielle maximale subie par la lamelle 32 lors de l'application d'un effort radial donné sur la lamelle 32.

En d'autres termes, pour un effort radial donné sur la lamelle 32, chaque point de la lamelle 32 subit une déformation circonférentielle donnée (c'est-à-dire un déplacement circonférentiel par rapport à une situation dans laquelle aucun effort n'est exercé sur ladite lamelle 32). La valeur de cette déformation circonférentielle est maximale pour un ou plusieurs points particuliers de la lamelle 32, et est appelée « déformation circonférentielle maximale de la lamelle ». Le capteur 22 est fixé en une partie de lamelle 32 dont les points, dans les mêmes conditions, subissent une déformation au moins égale à la moitié de la déformation maximale précitée.

Chaque lamelle 32 est configurée pour présenter une déformation orthoradiale, c'est-à-dire circonférentielle, comprise entre 1 et 50 microdéformations par newton d'effort radial appliqué à la lamelle 32.

Par « microdéformation », il est entendu, au sens de la présente invention, une déformation correspond à un allongement relatif, c'est-à-dire un déplacement rapporté à une longueur de base, égal à $1.10^{-6}$.

En outre, chaque lamelle 32 est configurée pour subir une déformation élastique pour tout effort radial dont la valeur est comprise entre 0,1 N et 100 N. Dans ce cas, chaque lamelle 32 est configurée pour présenter une déformation orthoradiale comprise entre environ une microdéformation et environ mille microdéformations, voire comprise entre une microdéformation et trois mille microdéformations dans le cas d'une lamelle 32 réalisée dans un acier à haute limite élastique.

Par exemple, dans le cas d'une cavité 28 à section en écusson, le capteur 22 est fixé à la lamelle 32, à l'écart d'un plan de symétrie de la lamelle 32 contenant l'axe de révolution X-X.

En outre, chaque capteur 22 est agencé de sorte que l'angle entre l'axe de mesure correspondant et un plan orthogonal à l'axe de révolution X-X soit inférieur ou égal à 20°, par exemple inférieur ou égal à 10°.

Par « angle entre l'axe de mesure et le plan orthogonal à l'axe de révolution X-X », il est entendu, au sens de la présente invention, le plus petit angle entre un vecteur directeur de l'axe de mesure et un vecteur directeur d'une droite appartenant audit plan orthogonal à l'axe de révolution X-X.

De préférence, chaque fibre optique 54 est enroulée en hélice circulaire autour d'un axe parallèle à l'axe de révolution X-X.

Avantageusement, chaque fibre optique 54 est engagée dans une ouverture traversante 48 associée de sorte que l'extrémité d'entrée-sortie 55 correspondante se trouve dans l'évidement central 46.

Avantageusement, chaque cavité 28 est remplie d'un élastomère destiné à assurer l'étanchéité de la cavité 28, notamment à empêcher d'éventuels liquides (eau, huiles) de pénétrer dans la cavité 28.

L'élastomère est choisi de façon à présenter une élasticité telle que, pour des lamelles 32 voisines, l'effet sur la déformation des lamelles 32 qui serait dû à un couplage latéral par l'intermédiaire de l'élastomère soit négligeable au regard de la sensibilité des capteurs 22.

Un tel élastomère est, par exemple, un élastomère silicone.

Chaque dispositif latéral 23 comprend une joue 56 et un palier 58.

L'un au moins des deux dispositifs d'extrémité 23 comporte un joint tournant optique 60. En outre, l'un des deux dispositifs d'extrémité 23 comporte un codeur angulaire 62.

Chaque joue 56 est agencée à une extrémité respective du corps 20 et fixée à ladite extrémité pour fermer, de préférence hermétiquement, le corps 20.

Chaque palier 58 comporte un rotor 58A, fixé à la joue 56, et un stator 58B, destiné à être fixé à un bâti de la ligne d'opérations de laminage 1, mobiles en rotation l'un par rapport à l'autre autour d'un axe de rotation correspondant. L'axe de rotation de chaque palier 58 est confondu avec l'axe de révolution X-X du corps 20.

Chaque joint tournant optique 60, également appelé « *fiber optic rotary joint* » en anglais, est configuré pour permettre une circulation ininterrompue d'ondes optiques entre le rouleau de planéité 18 et l'unité de détection 21, que le rouleau de planéité 18 soit en rotation (ligne d'opérations de laminage en fonctionnement) ou non (ligne d'opérations de laminage à l'arrêt).

Le joint tournant optique 60 comporte un nombre entier M de voies, M étant égal au nombre de fibres optiques auxquelles est raccordé le joint tournant optique 60. Par exemple, sur la figure 2, chaque joint tournant optique 60 comporte deux voies.

Chaque voie du joint tournant optique 60 comprend une première extrémité 60A et une deuxième extrémité 60B.

Chaque première extrémité 60A du joint tournant optique 60 est connectée à l'unité de détection 21. Plus précisément, chaque première extrémité du joint tournant optique 60 est connectée à un port d'entrée-sortie d'un circulateur correspondant.

En outre, chaque deuxième extrémité 60B du joint tournant optique 60 est connectée à l'extrémité d'entrée-sortie 55 d'une fibre optique 54 correspondante.

Le joint tournant optique 60 est configuré pour recevoir le signal d'interrogation en provenance de l'unité de détection 21, et pour acheminer le signal d'interrogation à destination de chaque fibre optique 54.

En outre, le joint tournant optique 60 est configuré pour recevoir le signal de mesure en provenance de chaque fibre optique 54, et pour acheminer le signal de mesure à destination de l'unité de détection 21.

Avantageusement, le joint tournant optique 60 présente une qualification IP64 ou IP65, c'est-à-dire conférant une protection totale contre les poussières, et une protection contre les projections liquides quel que soit leur angle d'incidence.

Le codeur angulaire 62 est configuré pour mesurer une position angulaire du rouleau de planéité 18 par rapport à une position angulaire de référence prédéterminée.

Le codeur angulaire 62 est connecté à l'unité de détection 21 pour transmettre, à destination de l'unité de détection 21, la position angulaire mesurée du rouleau de planéité 18.

Le codeur angulaire 62 est, avantageusement, de type absolu, monotour.

L'unité de détection 21 comporte une source optique 64, des moyens de routage 65, un module d'analyse spectrale 66 et un calculateur 68.

La source optique 64 est configurée pour générer l'onde optique formant le signal d'interrogation des capteurs 22 de chaque fibre optique 54.

La source optique 64 comporte K sorties, K étant égal à la somme du nombre M de voies des joints tournants optiques 60.

Chaque sortie de la source optique 64 est connectée à une première extrémité correspondante du joint tournant optique 60. Plus précisément, chaque sortie de la source optique 64 est connectée à un port d'entrée du circulateur associé à la première extrémité correspondante du joint tournant optique 60.

Avantageusement, le signal d'interrogation présente une étendue spectrale strictement supérieure au plus grand écart entre les longueurs d'onde de réflexion au repos $\lambda_0$ des capteurs 22.

Par exemple, la source optique 64 est configurée pour émettre un signal d'interrogation centré autour de 820 nm et présentant, par exemple, une étendue spectrale de 30 nm. Dans cette gamme de longueurs d'onde, la sensibilité usuelle des capteurs 22 est de l'ordre de 0,65 pm/microdéformation. Dans ce cas, le plus petit écart entre les longueurs d'onde de réflexion au repos $\lambda_0$ des capteurs 22 est, par exemple, égal à 1,6 nm.

Selon un autre exemple, la source optique 64 est configurée pour émettre un signal d'interrogation dont le spectre est compris entre 1525 nm et 1565 nm, voire entre 1525 nm et 1625 nm, ou encore entre 1460 nm et 1625 nm. Dans cette gamme de longueurs d'onde, la sensibilité usuelle des capteurs 22 est de l'ordre de 1,2 pm/microdéformation. Dans ce cas, le plus petit écart entre les longueurs d'onde de réflexion au repos $\lambda_0$ des capteurs 22 est, par exemple, égal à 3 nm.

En variante, la source optique 64 est une source laser accordable.

Les moyens de routage 65 sont reliés au codeur angulaire 62.

Les moyens de routage 65 sont également optiquement connectés au joint tournant optique 60. En particulier, les moyens de routage 65 sont connectés à un port de sortie de chaque circulateur pour recevoir le signal de mesure en provenance de chaque fibre optique 54.

Les moyens de routage 65 sont également optiquement connectés au module d'analyse spectrale 66 pour acheminer sélectivement, vers le module d'analyse spectrale 66, les signaux de mesure provenant des fibres optiques 54 d'une même génératrice 40, c'est-à-dire la ou les fibres optiques 54 dont les capteurs 22 sont fixés aux lamelles 32 de la génératrice. Plus précisément, les moyens de routage 65 sont configurés pour acheminer sélectivement, vers le module d'analyse spectrale 66, les signaux de mesures provenant des fibres optiques 54 d'une même génératrice 40 uniquement lorsque l'angle mesuré par le codeur angulaire 62 appartient à une plage prédéterminée associée à ladite génératrice 40.

De préférence, les plages prédéterminées sont deux à deux disjointes.

Le module d'analyse spectrale 66 est configuré pour analyser, au cours du temps, le signal de mesure reçu en provenance de chaque fibre optique 54.

Du fait de la nature des capteurs 22, l'analyse par le module d'analyse spectrale 66, à un instant donné, d'un signal de mesure délivré par une fibre optique 54 revient à une analyse simultanée des ondes optiques de réponse de l'ensemble des capteurs 22 appartenant à la fibre optique 54.

En outre, le recours aux moyens de routage 65 est tel que le module d'analyse spectrale 66 est apte à analyser simultanément, à un instant donné, les ondes optiques de réponse de l'ensemble des capteurs 22 d'une génératrice 40.

En outre, le module d'analyse spectrale 66 est configuré pour délivrer un signal d'analyse représentatif de la longueur d'onde de chaque pic dans le signal de réponse reçu en provenance de chaque fibre optique 54. En d'autres termes, le signal d'analyse est représentatif du spectre de l'onde optique de réponse de chacun des capteurs 22 de la génératrice 40.

Le module d'analyse spectrale 66 est, par exemple, un spectromètre à réseau concave, associé à une matrice de photodétecteurs. Dans ce cas, l'intensité relative entre les signaux électriques délivrés par les photodétecteurs est représentative du spectre du signal de mesure.

Le calculateur 68 est connecté au codeur angulaire 62 pour recevoir la position angulaire mesurée du rouleau de planéité 18.

En outre, le calculateur 68 est connecté au module d'analyse spectrale 66 pour acquérir le signal d'analyse généré en fonction de chaque signal de mesure.

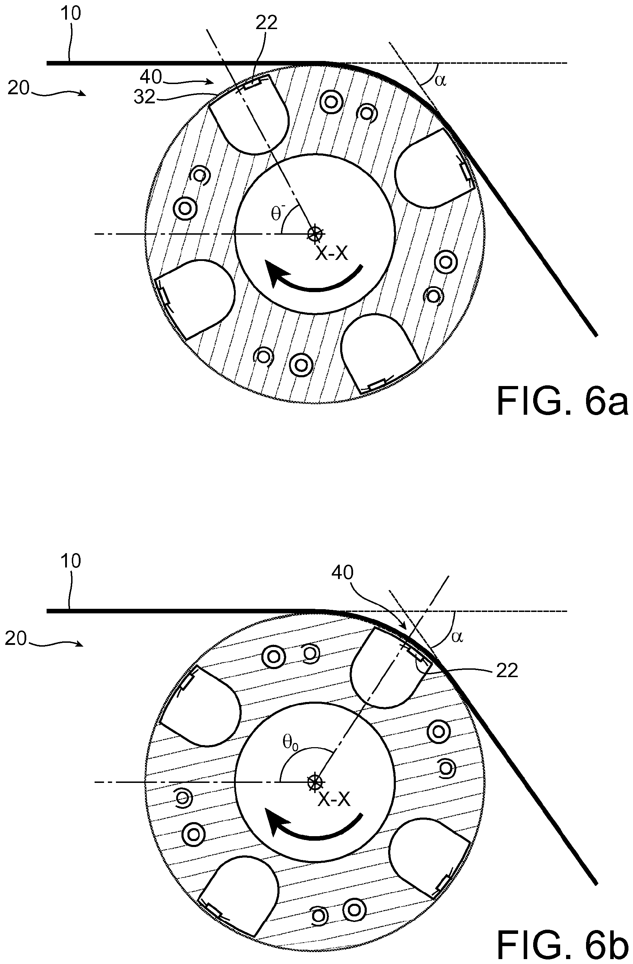

Le calculateur 68 est configuré pour stocker, pour chaque génératrice 40, un angle $\theta_0$, dit « angle de contact », correspondant à une position dans laquelle la génératrice 40 est censée être en contact avec la tôle 10, lors de la rotation du rouleau de planéité 18. Dans ce cas, le calculateur 68 est configuré pour acquérir le signal d'analyse lorsque l'angle mesuré par le codeur angulaire 62 est égal à l'angle de contact $\theta_0$. Un tel angle de contact $\theta_0$ est, par exemple, représenté sur la figure 6B.

Pour une génératrice 40 donnée, l'angle de contact $\theta_0$ appartient à la plage prédéterminée associée à la génératrice.

En outre, le calculateur 68 est configuré pour stocker, pour chaque fibre optique 54, la longueur d'onde de réflexion au repos $\lambda_0$ des capteurs 22 correspondants.

Le calculateur 68 est également configuré pour déterminer, à partir du signal d'analyse, la longueur d'onde de réflexion associée à chaque pic dans le spectre de mesure.

Le calculateur 68 est également configuré pour associer chaque longueur d'onde de réflexion déterminée au capteur 22 correspondant.

Par exemple, pour chaque fibre optique 54, le calculateur 68 est configuré pour associer une longueur d'onde mesurée au capteur 22 qui présente la longueur d'onde de réflexion au repos $\lambda_0$ la plus proche de ladite longueur d'onde mesurée. Un tel procédé d'association présente un faible taux d'erreur dans le cas où le plus petit écart entre les longueurs d'onde de réflexion au repos $\lambda_0$ des capteurs 22 est strictement supérieur au double de la variation maximale $\delta\lambda_{max}$ de longueur d'onde de réflexion susceptible d'être ressentie par chaque capteur 22.

En outre, le calculateur 68 est configuré pour calculer, pour chaque capteur 22, la variation de longueur d'onde $\delta\lambda$ résultant de la déformation du capteur 22 le long de l'axe de mesure correspondant, comme la différence entre la longueur d'onde mesurée et la longueur d'onde de référence :

$$\delta\lambda = \lambda_{m,\theta_0} - \lambda_0$$

où $\lambda_{m,\theta_0}$ est la longueur d'onde mesurée lorsque l'angle mesuré par le codeur angulaire 62 est égal à l'angle de contact $\theta_0$.

En outre, le calculateur 68 est configuré pour calculer l'effort appliqué à la lamelle 32 associée à un capteur 22 donné selon la formule :

$$\delta\sigma = \frac{\delta\lambda}{S} + C$$

où $\delta\sigma$ est l'effort appliqué sur la lamelle 32 (en newton N) ;
$\delta\lambda$ est la variation de longueur d'onde du capteur 22 (en pm) ;
S est la sensibilité du capteur 22 (en pm/N), déterminée au cours d'une étape d'étalonnage décrite ultérieurement ; et
C est un seuil de détection du capteur 22 (en N).

La détermination du seuil de détection sera décrite ultérieurement.

De préférence, le calculateur 68 est également configuré pour stocker, pour chaque génératrice 40, un angle $\theta^-$, dit « angle en entrée de contact », correspondant à une position dans laquelle la génératrice 40 est censée ne pas encore être entrée en contact avec la tôle 10, lors de la rotation du rouleau de planéité 18, comme illustré par la figure 6A. Sur cette figure 6A, ainsi que sur les figures 6B et 6C, la flèche en arc de cercle représente le sens de rotation du rouleau de planéité.

De préférence, le calculateur 68 est également configuré pour stocker, pour chaque génératrice 40, un angle $\theta^+$, dit « angle en sortie de contact », correspondant à une position dans laquelle la génératrice 40 est censée ne plus être en contact avec la tôle 10, lors de la rotation du rouleau de planéité 18, comme illustré par la figure 6C.

L'angle en entrée de contact $\theta^-$ et l'angle en sortie de contact $\theta^+$ sont tels que l'angle de contact $\theta_0$ est compris entre l'angle en entrée de contact $\theta^-$ et l'angle en sortie de contact $\theta^+$. Ceci apparaît, par exemple, sur les figures 6A à 6C.

En outre, pour une génératrice 40 donnée, l'angle en entrée de contact $\theta^-$ et l'angle en sortie de contact $\theta^+$ appartiennent à la plage prédéterminée associée à la génératrice.

Dans ce cas, le calculateur 68 est également configuré pour acquérir le signal d'analyse lorsque l'angle mesuré par le codeur angulaire 62 est égal à l'angle en entrée de contact $\theta^-$ et à l'angle en sortie de contact $\theta^+$, et pour associer chaque longueur d'onde mesurée par le module d'analyse spectrale 66 au capteur 22 correspondant.

En outre, le calculateur 68 est configuré pour calculer, pour chaque capteur 22, la variation de longueur $\delta\lambda$ résultant de la déformation du capteur 22 le long de l'axe de mesure correspondant et corrigée des effets de la température, selon la formule suivante :

$$\delta\lambda = \lambda_{m,\theta_0} - \frac{\lambda_{m,\theta^-} + \lambda_{m,\theta^+}}{2}$$

où $\lambda_{m,\theta^-}$ est la longueur d'onde mesurée lorsque l'angle mesuré par le codeur angulaire 62 est égal à l'angle en entrée de contact $\theta^-$; et
$\lambda_{m,\theta^+}$ est la longueur d'onde mesurée lorsque l'angle mesuré par le codeur angulaire 62 est égal à l'angle en sortie de contact $\theta^+$.

Pour une génératrice 40 donnée, le profil d'effort calculé constitue le vecteur de planéité.

Le calculateur 68 est également configuré pour comparer chaque vecteur de planéité à un profil cible.

Avantageusement, le calculateur 68 est également configuré pour générer, en fonction de la différence entre le vecteur de planéité et le profil cible, des instructions de commande des buses 14 et/ou des actionneurs 16.

Le fonctionnement du système de mesure de planéité 19 va maintenant être décrit.

Au cours d'une étape d'initialisation, pour chaque fibre optique 54, la valeur de la longueur d'onde de réflexion au repos $\lambda_0$ de chaque capteur 22 de la fibre optique 54 est enregistrée dans l'unité de traitement 21.

En outre, pour chaque génératrice 40, la valeur de l'angle de contact $\theta_0$ et, avantageusement, la valeur de l'angle en entrée de contact $\theta^-$ et de l'angle en sortie de contact $\theta^+$ sont enregistrées dans l'unité de traitement 21.

Au cours d'une étape d'étalonnage, un effort prédéterminé est appliqué sur la face externe 34 de chaque lamelle 32.

La variation de la longueur d'onde de réflexion de chaque capteur 22 en fonction de l'effort est mesurée, et un modèle reliant ladite variation de la longueur d'onde de réflexion à l'effort appliqué à la lamelle est déterminé. Puis, le modèle déterminé est enregistré dans l'unité de traitement 21. Un tel modèle est, par exemple, le modèle affine précédemment décrit :

$$\delta\sigma = \frac{\delta\lambda}{S} + C$$

Dans le cas où les valeurs des paramètres du modèle varient avec le capteur 22, les valeurs du modèle déterminé pour chaque capteur 22 sont enregistrées dans l'unité de traitement 21 en relation avec le capteur 22 correspondant.

Puis le rouleau de planéité 18 est inséré dans la ligne d'opérations de laminage 1.

La tôle 10 entraîne le rouleau de planéité 18 en rotation.

Le codeur angulaire 62 mesure la position angulaire du rouleau de planéité 18.

La source optique 64 génère le signal d'interrogation, et le joint tournant optique 60 achemine le signal d'interrogation à destination de chaque fibre optique 54.

Chaque fibre optique 54 renvoie, à destination du module d'analyse spectrale 66, le signal de mesure correspondant.

Lorsque l'angle mesuré par le codeur angulaire 62 appartient à une plage prédéterminée associée à une génératrice 40 donnée, les moyens de routage 65 transmettent, à destination du module d'analyse spectrale 66, les signaux de mesure issus des fibres optiques 54 de ladite génératrice 40.

Pour ladite génératrice 40, le module d'analyse spectrale 66 analyse, au cours du temps, le signal de mesure reçu en provenance de chaque fibre optique 54 correspondante. En outre, le module d'analyse spectrale 66 délivre, au cours du temps, le signal d'analyse représentatif de la longueur d'onde de chaque pic dans le signal de réponse reçu en provenance de chaque fibre optique 54.

Pour l'angle de contact $\theta_0$ associé à la génératrice 40, le calculateur 68 acquiert le signal d'analyse. Avantageusement, le calculateur 68 acquiert également le signal d'analyse pour l'angle en entrée de contact $\theta^-$ et pour l'angle en sortie de contact $\theta^+$ associés à la génératrice 40.

Puis, le calculateur 68 détermine la longueur d'onde de réflexion courante pour chaque capteur 22.

Puis, le calculateur 68 calcule, pour chaque capteur 22, la variation de longueur d'onde de réflexion $\delta\lambda$ associée à la longueur d'onde de réflexion $\lambda$ courante déterminée, c'est-à-dire la différence entre la longueur d'onde de réflexion $\lambda$ courante déterminée et la longueur d'onde de réflexion au repos $\lambda_0$.

Puis, pour chaque capteur 22, le calculateur 68 détermine, à partir de la variation de longueur d'onde de réflexion $\delta\lambda$ calculée, l'effort appliqué à la lamelle 32 associée au capteur 22. Le vecteur formé par l'effort appliqué à chacune des lamelles 32 de la génératrice 40 forme le vecteur de planéité associé à la génératrice 40.

Puis, le calculateur 68 compare le vecteur de planéité au profil cible.

Puis, le calculateur 68 génère, en fonction des différences entre le vecteur de planéité et le profil cible, des instructions de commande des buses 14 et/ou des actionneurs 16.

Les opérations mises en œuvre par le module d'analyse spectrale 66 et le calculateur 68, décrites précédemment, sont répétées à chaque fois que l'angle mesuré par le codeur angulaire 62 appartient à la plage prédéterminée associée à une nouvelle génératrice 40.

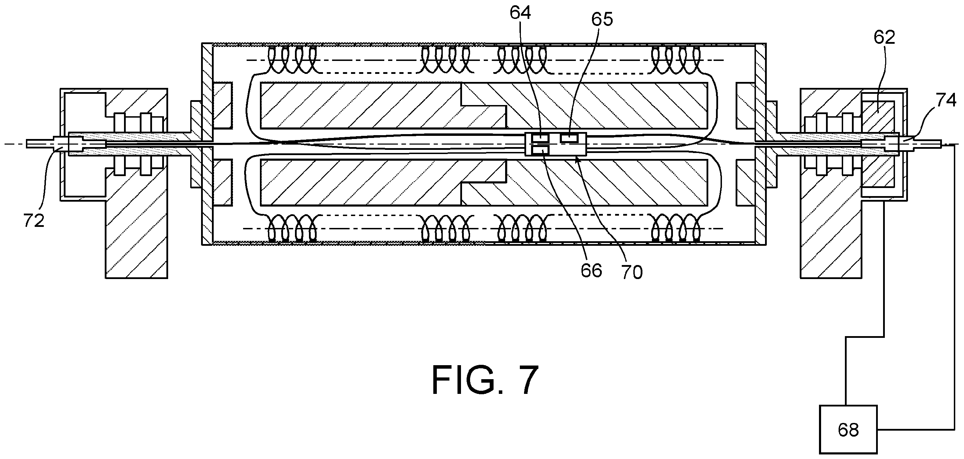

Un deuxième mode de réalisation du système de mesure de planéité 19 selon l'invention est illustré par la figure 7.

Le système de mesure de planéité 19 de la figure 7 diffère du système de mesure de planéité 19 de la figure 2 uniquement en ce qu'il est dépourvu de joint tournant optique.

Dans ce cas, la source optique 64, les moyens de routage 65 et le module d'analyse spectrale 66 sont agencés dans l'évidement central 46 du rouleau de planéité 18 pour former un ensemble d'interrogation Bragg 70.

Le rouleau de planéité 18 comporte également un joint tournant d'alimentation 72, configuré pour assurer le transport d'énergie électrique à l'ensemble d'interrogation Bragg 70 depuis une source d'énergie électrique externe au rouleau de planéité 18.

Le rouleau de planéité 18 comporte, en outre, un joint tournant de communication 74, configuré pour assurer une communication entre l'ensemble d'interrogation Bragg 70 et le calculateur 68, notamment pour assurer le transport du signal d'analyse depuis le module d'analyse spectrale 66 vers le calculateur 68.

Par exemple, le joint tournant de communication 74 est un joint tournant Ethernet.

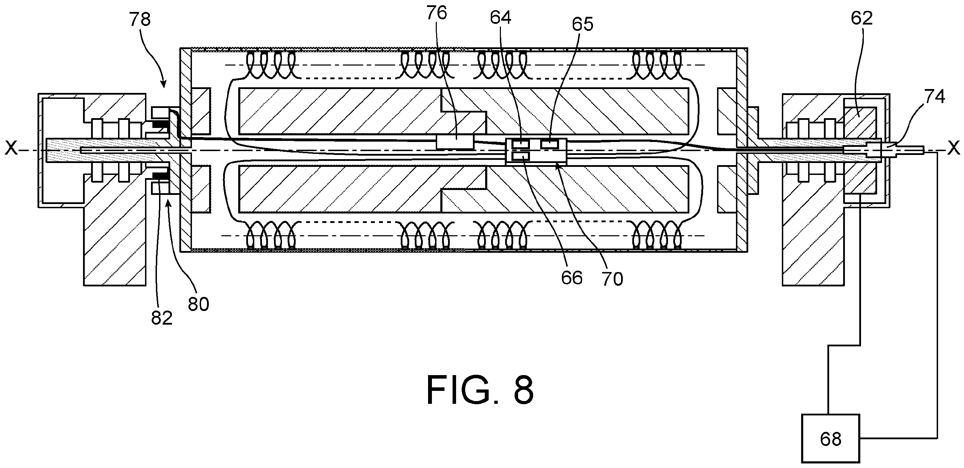

Un troisième mode de réalisation du système de mesure de planéité 19 selon l'invention est illustré par la figure 8.

Le système de mesure de planéité 19 de la figure 8 diffère du système de mesure de planéité 19 de la figure 7 uniquement en ce que le rouleau de planéité 18 est dépourvu de joint tournant d'alimentation. Dans ce cas, une batterie 76, représentée schématiquement sur la figure 8, est agencée dans l'évidement central 46 pour alimenter l'ensemble d'interrogation Bragg 70 en énergie électrique.

Avantageusement, l'un des dispositifs d'extrémité 23 du rouleau de planéité 18 comporte un alternateur 78, électriquement relié à la batterie 76.

L'alternateur 78 est configuré pour convertir une partie de l'énergie mécanique provenant de la rotation du rouleau de planéité 18 en énergie électrique pour recharger la batterie 76.

Par exemple, l'alternateur 78 comprend un induit 80, solidaire du corps 20, et un inducteur 82, destiné à être fixé au bâti recevant le rouleau de planéité 18. L'induit est configuré pour tourner, relativement à l'inducteur, autour de l'axe de révolution X-X.

L'inducteur 82 comprend, par exemple, une pluralité d'aimants permanents. En outre, l'induit 80 comporte, par exemple, une pluralité de spires disposées dans le champ magnétique généré par les aimants de l'inducteur.

Selon une variante des systèmes de mesure de planéité 19 des figures 7 ou 8, le module d'analyse spectrale 66 est externe au rouleau de planéité 18. Dans ce cas, le rouleau de planéité 18 comporte un joint tournant optique qui est uniquement destiné à acheminer les signaux de réponse depuis les fibres optiques 54 vers le module d'analyse spectrale 66 externe. En outre, dans ce cas, le rouleau de planéité 18 est dépourvu de joint tournant de communication.

Selon une variante des systèmes de mesure de planéité 19 des figures 7 ou 8, le rouleau de planéité 18 est dépourvu de joint tournant de communication. Dans ce cas, le rouleau de planéité 18 comporte un émetteur d'ondes électromagnétiques, configuré pour émettre, à destination du calculateur 68, des ondes électromagnétiques codées par le signal d'analyse délivré par le module d'analyse spectrale 66.

Le calculateur 68 est configuré pour recevoir les ondes électromagnétiques émises par l'émetteur d'ondes électromagnétiques et pour décoder lesdites ondes électromagnétiques afin de déterminer la longueur d'onde de réflexion de chaque capteur 22.

En outre, le rouleau de planéité 18 comporte au moins une portion transparente dans la gamme de fréquence d'émission de l'émetteur d'ondes électromagnétiques pour permettre la propagation des ondes électromagnétiques depuis l'émetteur d'ondes électromagnétiques vers le calculateur 68.

Par exemple, l'émetteur d'ondes électromagnétiques est un module transmetteur Wi-Fi (norme IEEE 802.11). Par exemple, la portion transparente est une fenêtre ménagée dans une des joues 56 du rouleau de planéité 18. Par exemple, la fenêtre est réalisée en polyméthacrylate de méthyle (PMMA), en polycarbonate (PC) ou en matériau composite verre-époxy (également appelé « *glass fiber reinforced plastics* » en anglais).

De façon plus générale, le rouleau de planéité 18 comporte au moins une portion transparente, la portion transparente étant propre à transmettre au moins partiellement une onde électromagnétique appartenant à une gamme de fréquences prédéterminée, par exemple appartenant aux micro-ondes, aux ondes optiques, au proche ultraviolet ou au proche infrarouge.

Dans ce cas, le calculateur 68 est susceptible d'être agencé dans l'évidement central 46, de sorte que l'émetteur d'ondes électromagnétiques soit utilisé pour transmettre directement les instructions de commande des buses 14 et/ou des actionneurs 16 générées par le calculateur 68.

La présence des fentes 30 empêche l'apparition de couplages latéraux le long de chaque génératrice 40.

Par « couplage latéral » (« *cross-talk* » en anglais), il est entendu, au sens de la présente demande, l'apparition de contraintes axiales le long d'une génératrice lorsqu'une contrainte radiale est appliquée sur le rouleau de planéité 18. En d'autres termes, dans le cas d'un couplage latéral, une contrainte appliquée en un point donné de la génératrice 40 se traduit par l'apparition d'une contrainte en des points voisins, notamment des points voisins appartenant à la génératrice, même en l'absence d'effort radial exercé sur lesdits points.

De tels couplages latéraux requièrent généralement de lourds calculs pour être compensés. En outre, les résultats obtenus à l'issue de tels calculs ne présentent généralement pas une précision suffisante. Ceci se traduit par une dégradation des performances de la boucle de régulation.

La présence des fentes 30 réduit substantiellement la propagation d'efforts axiaux le long de la génératrice 40. De tels calculs ne sont plus nécessaires, et les performances de la boucle de régulation sont améliorées.

Le fait que l'axe de mesure de chaque capteur 22 forme, avec tout plan orthogonal à l'axe de révolution X-X, un angle inférieur ou égal à 10°, conduit à ce que chaque capteur 22 mesure uniquement ou essentiellement une composante circonférentielle, c'est-à-dire orthoradiale, de la déformation de la lamelle 32 correspondante. Or, la demanderesse a constaté que, lors de l'application d'un effort radial sur une lamelle 32, la composante circonférentielle de la déformation de la lamelle 32 est la déformation présentant, en valeur absolue, la plus grande amplitude. Il en résulte qu'un tel agencement des axes de mesure des capteurs 22 maximise l'amplitude de l'élongation des capteurs 22, et donc maximise la sensibilité du rouleau de planéité 18.

Le recours à de tels capteurs 22 à réseau de Bragg sur fibre est avantageux, dans la mesure où leur sensibilité, c'est-à-dire l'amplitude de leur réponse, pour un signal d'interrogation d'amplitude constante, est indépendante de la température dans les plages de températures usuelles dans le domaine du laminage, en particulier du laminage à froid.

Le recours à de tels capteurs 22 optiques est avantageux, en particulier dans un environnement métallurgique, par exemple sidérurgique, siège de perturbations électromagnétiques générées par la présence de fours à induction et de machines tournantes, dans la mesure où de tels capteurs sont insensibles à de telles perturbations électromagnétiques.

En outre, le recours à de tels capteurs 22 en association aux lamelles 32 confère au rouleau de planéité 18 une grande sensibilité, une grande dynamique et une grande robustesse. En effet, en fonctionnement, le corps 20 supporte la majorité de l'effort exercé par la tôle 10 sur le rouleau de planéité 18. En outre, de tels capteurs 22 sont susceptibles de subir une grande plage d'efforts, de l'ordre de trois ordres de grandeur, sans risque de destruction. En outre, de tels capteurs, même lorsqu'ils sont soumis à un effort moyen important (par exemple 2000 N) sont susceptibles de détecter des variations infimes d'effort (par exemple 2 N).

Le recours à de tels capteurs 22 optiques est également avantageux, dans la mesure où le multiplexage en longueur d'onde sur une même fibre optique 54 autorise une analyse simultanée des ondes optiques de réponse de chaque capteur 22. La mesure est alors synchrone sur une génératrice, éliminant les biais de mesure liés à des phénomènes de balourds, excentricités de bobineuse, etc. Il en résulte un gain conséquent en précision de mesure comparativement aux dispositifs de l'état de la technique à capteurs électromécaniques, qui requièrent généralement une acquisition séquentielle et ne fournissent donc pas une mesure synchrone vraie.

Une telle acquisition simultanée est également avantageuse dans la mesure où une acquisition séquentielle des capteurs, pendant la rotation du rouleau de planéité 18, est susceptible de masquer des biais potentiels liés à d'éventuelles fluctuations périodiques d'effort au niveau de la cage de laminoir 4.

Le recours à de tels capteurs 22 est également avantageux dans la mesure où leur coût est généralement plus faible que le coût des capteurs électromécaniques usuels.

Le recours à de tels capteurs 22 optiques est également avantageux dans la mesure où leurs faibles dimensions autorisent la réalisation de lamelles 32 de faible étendue axiale, ce qui accroît la résolution spatiale du système de mesure de planéité 19 le long de chaque génératrice 40. Ceci est particulièrement avantageux dans le domaine du laminage de tôles fines, où la résolution axiale (c'est-à-dire la résolution suivant l'axe de révolution du rouleau de planéité 18) requise est de l'ordre de quelques millimètres, notamment au niveau des bords latéraux de la tôle 10, c'est-à-dire les bords destinés à exercer un effort sur les zones périphériques 42 de chaque génératrice 40.

Par ailleurs, le recours à un corps 20 formé de plusieurs tronçons 26A, 26B autorise une installation plus simple des fibres optiques 54, dans la mesure où chaque tronçon 26A, 26B est susceptible d'être équipé des fibres optiques 54 correspondantes, avant l'assemblage du corps 20. En effet, en raison des dimensions du corps 20, l'installation des fibres optiques 54 dans un corps 20 monobloc est susceptible de poser des difficultés.

Le recours à un corps 20 formé de plusieurs tronçons 26A, 26B facilite également les réparations du rouleau de planéité 18, dans la mesure où seul le tronçon correspondant à une zone défectueuse du rouleau de planéité 18 est remplacé, et non pas le rouleau de planéité dans son intégralité.

La présence des parties pleines 29 dans le corps 20 assure une reprise des efforts exercés par la tôle 10, ce qui confère au corps 20 une plus grande rigidité que les dispositifs de l'état de la technique.

En outre, le corps 20 étant métallique, l'agencement de tout ou partie des organes de l'unité de traitement 21 (parmi lesquels la source optique 64, le module d'analyse spectrale 66 ou le calculateur 68) dans le corps 20 confère au corps 20 une fonction de protection contre les perturbations électromagnétiques, dite de « blindage électromagnétique ». Une telle protection est particulièrement avantageuse dans un environnement métallurgique, par exemple sidérurgique, siège de perturbations électromagnétiques générées par la présence de fours à induction et de machines tournantes.

**Revendications**

1. Rouleau de planéité (18) comportant un corps (20) de forme cylindrique s'étendant le long d'un axe de révolution (X-X) et délimité radialement par une surface externe (24), corps (20) comportant au moins une cavité (28) s'étendant parallèlement à l'axe de révolution (X-X), **caractérisé en ce que**:

chaque cavité (28) débouche radialement sur la surface externe (24) au travers d'une pluralité de fentes (30) s'étendant chacune dans un plan respectif orthogonal à l'axe de révolution (X-X), parmi lesquelles deux fentes (30) successives le long d'un axe parallèle à l'axe de révolution (X-X) définissant entre elles une lamelle (32), chaque lamelle (32) étant reliée au corps (20) par deux extrémités circonférentielles (38) opposées de la lamelle (32), chaque extrémité circonférentielle (38) formant un encastrement, les lamelles (32) alignées suivant une direction parallèle à l'axe de révolution (X-X) formant une génératrice (40), le rouleau de planéité (18) comportant, en outre, au moins une fibre optique (54) comprenant au moins un capteur de déformation (22), chaque capteur de déformation (22) présentant un axe de mesure, chaque capteur de déformation (22) étant associé à une lamelle (32), chaque capteur de déformation (22) étant logé dans une cavité (28) correspondante et fixé à la lamelle (32) correspondante au niveau d'un encastrement de la lamelle (32), chaque capteur de déformation (22) étant agencé de sorte que l'angle entre l'axe de mesure correspondant et un plan orthogonal à l'axe de révolution (X-X) soit inférieur ou égal à 20°, de préférence inférieur ou égal à 10°, chaque fibre optique (54) étant configurée pour recevoir un signal d'interrogation, chaque capteur de déformation (22) de chaque fibre optique (54) étant configuré pour émettre, en fonction du signal d'interrogation reçu par la fibre optique (54) correspondante, une onde optique de réponse représentative d'une déformation du capteur de déformation (22) le long de l'axe de mesure correspondant.

2. Rouleau de planéité (18) selon la revendication 1, dans lequel au moins une lamelle (32) présente une épaisseur constante.

3. Rouleau de planéité (18) selon la revendication 1 ou 2, dans lequel au moins une cavité (28) présente, dans un plan orthogonal à l'axe de révolution (X-X), une section circulaire.

4. Rouleau de planéité (18) selon l'une quelconque des revendications 1 à 3, dans lequel chaque lamelle (32) est configurée pour présenter une déformation circonférentielle comprise entre 1 et 50 microdéformations par newton d'effort radial appliqué à la lamelle (32).

5. Rouleau de planéité (18) selon l'une quelconque des revendications 1 à 4, dans lequel chaque génératrice (40) présente une densité de fentes (30) variable, la densité de fentes (30) dans au moins une zone périphérique (42) de la génératrice (40) étant, de préférence, supérieure à la densité de fentes (30) dans une zone intermédiaire (44) de la génératrice (40).

6. Rouleau de planéité (18) selon l'une quelconque des revendications 1 à 5, dans lequel le corps (20) est formé d'une pluralité de tronçons (26A, 26B) agencés bout-à-bout axialement, chaque tronçon étant associé à au moins une fibre optique (54) propre dont l'ensemble des capteurs de déformation (22) sont fixés aux lamelles (32) dudit tronçon (26A, 26B).

7. Rouleau de planéité (18) selon l'une quelconque des revendications 1 à 6, dans lequel le corps (20) comporte au moins une partie pleine (29) agencée radialement vers l'intérieur par rapport à au moins une cavité (28) et/ou circonférentiellement entre deux cavités (28).

8. Rouleau de planéité (18) selon l'une quelconque des revendications 1 à 7, dans lequel chaque cavité (28) est remplie d'un élastomère agencé pour assurer une étanchéité de la cavité (28).

9. Rouleau de planéité (18) selon l'une quelconque des revendications 1 à 8, comportant au moins une portion transparente, la portion transparente étant propre à transmettre au moins partiellement une onde électromagnétique appartenant à une gamme de fréquences prédéterminée.

10. Rouleau de planéité (18) selon l'une quelconque des revendications 1 à 9, dans lequel chaque capteur de déformation (22) est un réseau de Bragg photo-inscrit sur fibre.

11. Système de mesure de planéité (19) comportant un rouleau de planéité (18) selon l'une quelconque des revendications 1 à 10 et une unité de détection (21),

l'unité de détection (21) étant configurée pour émettre le signal d'interrogation à destination de chaque fibre optique (54) et pour recevoir, en provenance de chaque fibre optique (54), un signal de mesure formé par les ondes optiques de réponse générées par les capteurs de déformation (22) de la fibre optique (54),

l'unité de détection (21) étant également configurée pour mesurer un angle de rotation du corps (20) par rapport à une position de référence, chaque génératrice (40) étant associée à un angle de contact ($\theta_0$),

l'unité de détection (21) étant configurée pour acquérir le signal de mesure en provenance de chaque fibre optique (54) lorsque l'angle de rotation du corps (20) est égal à l'angle de contact ($\theta_0$),

l'unité de détection (21) étant, en outre, configurée pour calculer un vecteur de planéité en fonction de chaque signal de mesure acquis.

12. Système de mesure de planéité (19) selon la revendication 11, dans lequel chaque génératrice (40) est également associée à un angle en entrée de contact ($\theta^-$) et un angle en sortie de contact ($\theta^+$), l'angle de contact ($\theta_0$) étant compris entre l'angle en entrée de contact ($\theta^-$) et l'angle en sortie de contact ($\theta^+$),

l'unité de détection (21) étant configurée pour acquérir le signal de mesure en provenance de chaque fibre optique (54) lorsque l'angle de rotation du corps (20) est égal à chacun parmi l'angle en entrée de contact ($\theta^-$) et l'angle en sortie de contact ($\theta^+$),

l'unité de détection (21) étant, en outre, configurée pour mettre en œuvre le signal de mesure acquis pour chacun parmi l'angle en entrée de contact ($\theta^-$), l'angle de contact ($\theta_0$) et l'angle en sortie de contact ($\theta^+$) pour calculer un vecteur de planéité corrigé d'effets de la température sur les lamelles (32) de la génératrice (40) lors de la rotation du corps (20) entre l'angle en entrée de contact ($\theta^-$) et l'angle en sortie de contact ($\theta^+$) correspondants.

13. Système de mesure de planéité (19) selon la revendication 11 ou 12, dans lequel le corps (20) du rouleau de planéité (18) est métallique et comporte un évidement central (46), l'unité de traitement (21) étant au moins en partie logée dans l'évidement central (46).

14. Ligne d'opérations de laminage (1) comportant un système de mesure de planéité (19) selon l'une quelconque des revendications 11 à 13.

**Patentansprüche**

1. Planheitswalze (18), umfassend einen Körper (20) zylindrischer Form, der sich entlang einer Drehachse (X-X) erstreckt und radial von einer Außenoberfläche (24) begrenzt ist,

wobei der Körper (20) wenigstens einen Hohlraum (28) umfasst, der sich parallel zur Drehachse (X-X) erstreckt, **dadurch gekennzeichnet, dass**:

jeder Hohlraum (28) radial auf die Außenoberfläche (24) durch eine Vielzahl von Spalten (30) mündet, die sich jeweils in einer jeweiligen Ebene orthogonal zur Drehachse (X-X) erstrecken, von denen zwei aufeinanderfolgende Spalte (30) entlang einer Achse parallel zur Drehachse (X-X) zwischen sich eine Lamelle (32) definieren,

wobei jede Lamelle (32) mit dem Körper (20) durch zwei gegenüberliegende umlaufende Enden (38) der Lamelle (32) verbunden ist, wobei jedes umlaufende Ende (38) eine Einbettung bildet,

wobei die Lamellen (32), die gemäß einer Richtung parallel zur Drehachse (X-X) ausgerichtet sind, einen Generator (40) bilden,

wobei die Planheitswalze (18) weiter wenigstens eine Glasfaser (54) umfasst, die wenigstens einen Verformungssensor (22) umfasst, wobei jeder Verformungssensor (22) eine Messachse aufweist, wobei jeder Verformungssensor (22) einer Lamelle (32) zugehörig ist,

wobei jeder Verformungssensor (22) in einem entsprechenden Hohlraum (28) aufgenommen und an der entsprechenden Lamelle (32) auf Höhe einer Einbettung der Lamelle (32) befestigt ist,

wobei jeder Verformungssensor (22) so angeordnet ist, dass der Winkel zwischen der entsprechenden Messachse und einer Ebene orthogonal zur Drehachse (X-X) kleiner oder gleich 20° ist, vorzugsweise kleiner oder gleich 10°,

wobei jede Glasfaser (54) ausgestaltet ist, ein Abfragesignal zu empfangen, wobei jeder Verformungssensor (22) jeder Glasfaser (54) ausgestaltet ist, in Abhängigkeit von dem von der entsprechenden Glasfaser (54) empfangenen Abfragesignal eine optische Antwortwelle auszusenden, die bezeichnend ist für eine Verformung des Verformungssensors (22) entlang der entsprechenden Messachse.

2. Planheitswalze (18) nach Anspruch 1, wobei wenigstens eine Lamelle (32) eine konstante Dicke aufweist.

3. Planheitswalze (18) nach Anspruch 1 oder 2, wobei wenigstens ein Hohlraum (28), in einer Ebene orthogonal zur Drehachse (X-X), einen runden Querschnitt aufweist.

4. Planheitswalze (18) nach einem der Ansprüche 1 bis 3, wobei jede Lamelle (32) ausgestaltet ist, eine umlaufende Verformung aufzuweisen, die zwischen 1 und 50 Mikroverformungen pro Newton einer Radialkraft beträgt, die auf die Lamelle (32) angewendet wird.

5. Planheitswalze (18) nach einem der Ansprüche 1 bis 4, wobei jeder Generator (40) eine variable Spaltdichte (30) aufweist, wobei die Spaltdichte (30) in wenigstens einem Randbereich (42) des Generators (40) vorzugsweise größer ist als die Spaltdichte (30) in einem Zwischenbereich (44) des Generators (40).

6. Planheitswalze (18) nach einem der Ansprüche 1 bis 5, wobei der Körper (20) von einer Vielzahl von Teilstücken (26A, 26B) gebildet wird, die axial nebeneinander angeordnet sind, wobei jedes Teilstück wenigstens einer eigenen Glasfaser (54) zugehörig ist, von der die Gesamtheit der Verformungssensoren (22) an den Lamellen (32) des Teilstücks (26A, 26B) befestigt ist.

7. Planheitswalze (18) nach einem der Ansprüche 1 bis 6, wobei der Körper (20) wenigstens einen massiven Teil (29) umfasst, der radial nach innen in Bezug auf wenigstens einen Hohlraum (28) und/oder umlaufend zwischen zwei Hohlräumen (28) angeordnet ist.

8. Planheitswalze (18) nach einem der Ansprüche 1 bis 7, wobei jeder Hohlraum (28) mit einem Elastomer gefüllt ist, das angeordnet ist, um eine Dichtheit des Hohlraums (28) sicherzustellen.

9. Planheitswalze (18) nach einem der Ansprüche 1 bis 8, umfassend wenigstens einen transparenten Abschnitt, wobei der transparente Abschnitt geeignet ist, wenigstens teilweise eine elektromagnetische Welle zu übertragen, die zu einem vorbestimmten Frequenzspektrum gehört.

10. Planheitswalze (18) nach einem der Ansprüche 1 bis 9, wobei jeder Verformungssensor (22) ein in Lichtwellenleiter eingeschriebenes Bragg-Gitter ist.

11. System zur Messung der Planheit (19), umfassend eine Planheitswalze (18) nach einem der Ansprüche 1 bis 10 und eine Erkennungseinheit (21),

wobei die Erkennungseinheit (21) ausgestaltet ist, das Abfragesignal an jede Glasfaser (54) auszusenden und ausgehend von jeder Glasfaser (54) ein Messsignal zu empfangen, das von den optischen Antwortwellen gebildet wird, die von den Verformungssensoren (22) der Glasfaser (54) erzeugt werden, wobei die Erkennungseinheit (21) ebenfalls ausgestaltet ist, einen Drehwinkel des Körpers (20) in Bezug auf eine Referenzposition zu messen, wobei jeder Generator (40) einem Kontaktwinkel ($\theta_0$) zugehörig ist, wobei die Erkennungseinheit (21) ausgestaltet ist, das Messsignal ausgehend von jeder Glasfaser (54) zu erfassen, wenn der Drehwinkel des Körpers (20) gleich dem Kontaktwinkel ($\theta_0$) ist, wobei die Erkennungseinheit (21) weiter ausgestaltet ist, einen Planheitsvektor in Abhängigkeit von jedem erfassten Messsignal zu berechnen.

12. System zur Messung der Planheit (19) nach Anspruch 11, wobei jeder Generator (40) ebenfalls einem Kontakteintrittswinkel ($\theta^-$) und einem Kontaktaustrittswinkel ($\theta^+$) zugehörig ist, wobei der Kontaktwinkel ($\theta_0$) zwischen dem Kontakteintrittswinkel ($\theta^-$) und dem Kontaktaustrittswinkel ($\theta^+$) umfasst ist,

wobei die Erkennungseinheit (21) ausgestaltet ist, das Messsignal ausgehend von jeder Glasfaser (54) zu erfassen, wenn der Drehwinkel des Körpers (20) gleich jedem von dem Kontakteintrittswinkel ($\theta^-$) und dem Kontaktaustrittswinkel ($\theta^+$) ist, wobei die Erkennungseinheit (21) weiter ausgestaltet ist, das Messsignal umzusetzen, das für jeden von dem Kontakteintrittswinkel ($\theta$), dem Kontaktwinkel ($\theta_0$) und dem Kontaktaustrittswinkel ($\theta^+$) erfasst wird, um einen Planheitsvektor zu berechnen, der bereinigt ist von den Wirkungen der Temperatur auf die Lamellen (32) des Generators (40) bei der Drehung des Körpers (20) zwischen dem entsprechenden Kontakteintrittswinkel ($\theta^-$) und Kontaktaustrittswinkel ($\theta^+$).

13. System zur Messung der Planheit (19) nach Anspruch 11 oder 12, wobei der Körper (20) der Planheitswalze (18) metallisch ist und eine zentrale Aussparung (46) umfasst, wobei die Bearbeitungseinheit (21) wenigstens zum Teil in der zentralen Aussparung (46) aufgenommen ist.

14. Linie für Walzvorgänge (1), umfassend ein System zur Messung der Planheit (19) nach einem der Ansprüche 11 bis 13.

**Claims**

1. Flatness roller (18) including a cylindrical body (20) extending along an axis of revolution (X-X) and radially delimited by an outer surface (24), the body (20) including at least one cavity (28) extending parallel to the axis of revolution (X-X), **characterized in that**:

each cavity (28) opens radially onto the outer surface (24) through a plurality of slots (30) each extending in a respective plane orthogonal to the axis of revolution (X-X), of which two successive slots (30) along an axis parallel to the axis of revolution (X-X) defining a lamella (32) between them,

each lamella (32) being connected to the body (20) by two opposite circumferential ends (38) of the lamella (32), each circumferential end (38) forming a connection portion,

the lamellas (32) aligned in a direction parallel to the axis of revolution (X-X) forming a generatrix (40),

the flatness roller (18) further including at least one optical fibre (54) comprising at least one strain sensor (22), each strain sensor (22) having a measurement axis, each strain sensor (22) being associated with a lamella (32),

each strain sensor (22) being housed in a corresponding cavity (28) and attached to the corresponding lamella (32) at a connection portion of the lamella (32),

each strain sensor (22) being arranged so that the angle between the corresponding measurement axis and a plane orthogonal to the axis of revolution (X-X) is less than or equal to 20°, preferably less than or equal to 10°,

each optical fibre (54) being configured to receive an interrogation signal, each strain sensor (22) of each optical fibre (54) being configured to send, depending on the interrogation signal received by the corresponding optical fibre (54), an optical response wave representative of a strain of the strain sensor (22) along the corresponding measurement axis.

2. Flatness roller (18) according to claim 1, wherein at least one lamella (32) has a constant thickness.

3. Flatness roller (18) according to claim 1 or 2, wherein at least one cavity (28) has, in a plane orthogonal to the axis of revolution (X-X), a circular section.

4. Flatness roller (18) according to any one of claims 1 to 3, wherein each lamella (32) is configured to have a circumferential strain between 1 and 50 microstrains per newton of radial force applied to the lamella (32).

5. Flatness roller (18) according to any one of claims 1 to 4, wherein each generatrix (40) has a variable density of slots (30), the density of slots (30) in at least one peripheral area (42) of the generatrix (40) being, preferably, greater than the density of slots (30) in the intermediate area (44) of the generatrix (40).

6. Flatness roller (18) according to any one of claims 1 to 5, wherein the body (20) consists of a plurality of sections (26A, 26B) arranged axially end to end, each section being associated to at least one specific optical fibre (54) whereof all of the strain sensors (22) are attached to the lamellas (32) of said section (26A, 26B).

7. Flatness roller (18) according to any one of claims 1 to 6, wherein the body (20) includes at least one solid portion (29) arranged radially inwardly in relation to at least one cavity (28) and/or circumferentially between two cavities (28).

8. Flatness roller (18) according to any one of claims 1 to 7, wherein each cavity (28) is filled with an elastomer arranged to provide a sealing of the cavity (28).

9. Flatness roller (18) according to any one of claims 1 to 8, including at least one transparent portion, the transparent portion being suitable for transmitting at least partially one electromagnetic wave belonging to a predetermined range of frequencies.

10. Flatness roller (18) according to any one of claims 1 to 9, wherein each strain sensor (22) is a fibre Bragg grating.

11. System for measuring flatness (19) including a flatness roller (18) according to any one of claims 1 to 10 and a detection unit (21),

the detection unit (21) being configured to send the interrogation signal to each optical fibre (54) and to receive, from each optical fibre (54), a measurement signal formed by the optical response waves generated by the strain sensors (22) of the optical fibre (54),

the detection unit (21) being further configured to measure an angle of rotation of the body (20) in relation to a reference position, each generatrix (40) being associated with a contact angle ($\theta_0$),

the detection unit (21) being configured to acquire the measurement signal coming from each optical fibre (54) when the angle of rotation of the body (20) is equal to the contact angle ($\theta_0$),

the detection unit (21) being further configured to calculate a flatness vector depending on each acquired measurement signal.

12. System for measuring flatness (19) according to claim 11, wherein each generatrix (40) is also associated with an entry contact angle ($\theta^-$) and an exit contact angle ($\theta^+$), the contact angle ($\theta_0$) being between the entry contact angle ($\theta^-$) and the exit contact angle ($\theta^+$),

the detection unit (21) being configured to acquire the measurement signal coming from each optical fibre (54) when the angle of rotation of the body (20) is equal to each of the entry contact angle ($\theta^-$) and the exit contact angle ($\theta^+$), the detection unit (21) being, furthermore, configured to implement the measurement signal acquired for each of the entry contact angle ($\theta^-$), the contact angle ($\theta_0$) and the exit contact angle ($\theta^+$) in order to calculate a flatness vector corrected with effects of the temperature on the lamellas (32) of the generatrix (40) during the rotation of the body (20) between the corresponding entry contact angle ($\theta^-$) and the exit contact angle ($\theta^+$).

13. System for measuring flatness (19) according to claim 11 or 12, wherein the body (20) of the flatness roller (18) is metal and includes a central recess (46), the processing unit (21) being at least partially housed in the central recess (46).

14. Rolling operation line (1) including a system for measuring flatness (19) according to any one of claims 11 to 13.

FIG. 1

FIG. 3

FIG. 2

EP 3 755 476 B1

FIG. 4

FIG. 5

FIG. 6a

FIG. 6b

FIG. 6c

FIG. 9

FIG. 7

EP 3 755 476 B1

FIG. 8

EP 3 755 476 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3009206 A1